## Europäisches Patentamt

## European Patent Office

## Office européen des brevets

(11) Numéro de publication: **0 161 179**
**B1**

(12) **FASCICULE DE BREVET EUROPEEN**

(45) Date de publication du fascicule du brevet:
**28.12.88**

(51) Int. Cl.⁴: $G\ 01\ T\ 1/20,\ G\ 01\ T\ 1/202$

(21) Numéro de dépôt: **85400755.6**

(22) Date de dépôt: **16.04.85**

(54) **Photoscintillateur très rapide, à haute résolution, et détecteur à scintillation utilisant ce photoscintillateur.**

(30) Priorité: **20.04.84 FR 8406305**

(43) Date de publication de la demande:
**13.11.85 Bulletin 85/46**

(45) Mention de la délivrance du brevet:
**28.12.88 Bulletin 88/52**

(84) Etats contractants désignés:
**DE GB NL SE**

(56) Documents cités:
**WO-A-81/00457**
**FR-A- 2 316 609**

**REVIEW OF SCIENTIFIC INSTRUMENTS, vol. 24, no. 11, novembre 1953, pages 1046-1050, New York, US; C.J. BORKOWSKI et al.: "Gamma-ray energy resolution with NaI-T1I scintillation spectrometers"**
**APPLIED OPTICS, vol. 7, no. 11, novembre 1968, pages 2289-2294, New York, US; F. GRUM et al.: "Optical sphere paint and a working standard of reflectance"**
**IEEE TRANSACTIONS ON NUCLEAR SCIENCES, vol. NS-14, février 1967, pages 686-690, New York, US; M.M. WEINER: "Specular reflections In scintillation frustums"**
**NUCLEONICS, septembre 1960, pages 92-100, New York, US; G.J. HINE et al.: "Conical plastic scintillators show total gamma absorption"**

(73) Titulaire: **COMMISSARIAT A L'ENERGIE ATOMIQUE, 31/33, rue de la Fédération, F-75015 Paris (FR)**

(72) Inventeur: **Laval, Michel, Le Replat du Pinet, F-38410 Saint Martin D'Uriage (FR)**
Inventeur: **Vacher, Jacques, 64, Avenue du Vercors, F-38170 Seyssinet-Pariset (FR)**

(74) Mandataire: **Mongrédien, André et al, c/o BREVATOME 25, rue de Ponthieu, F-75008 Paris (FR)**

## Description

La présente invention concerne un photoscintillateur très rapide, à haute résolution, et un détecteur à scintillation utilisant ce photoscintillateur et permettant ainsi une détection très rapide de photons de grande énergie (photons $\gamma$). Elle trouve une application dans la réalisation de tomographes à positions et plus particulièrement de tomographes à positions et à temps de vol.

Le fluorure de baryum transparent dand un domaine de longueurs d'onde s'étendant à partir d'environ 200 nm et pouvant aller jusqu'à 600 nm est connu et utilisé pour fabriquer des fenêtres transparentes aux rayons ultraviolets. A cet effet, il est commercialement disponible auprès des laboratoires MERCK-CLEVENOT par exemple.

Ce matériau, qui, sous l'impact de photons de grande énergie, est sujet à une émission de lumière comportant non seulement une composante lente correspondant à des longueurs d'onde supérieures à 250 nm et pouvant aller jusqu'à 600 nm, avec une constante de temps élevée, de l'ordre de 0,6 µs, mais encore une composante rapide correspondant à des longueurs d'onde allant d'environ 200 nm à environ 250 nm, avec une constante de temps très courte, de l'ordre de 0,8 ns, est apparu comme étant utilisable pour réaliser des photoscintillateurs très rapides, préférables aux photoscintillateurs en fluorure de césium, du fait de leur commodité d'emploi, résultant notamment de leur absence d'affinité pour l'eau, et de leurs plus grandes performances temporelles.

La présente invention vise à optimiser les caractéristiques des photoscintillateurs en fluorure de baryum ci-dessus et des détecteurs à scintillation réalisés à l'aide de tels photoscintillateurs, en ce qui concerne, premièrement, leur résolution en énergie, et deuxièmement, leur résolution temporelle.

De façon précise, la présente invention a tout d'abord pour objet un photoscintillateur très rapide réalisé en fluorure de baryum transparent dans un domaine de longueurs d'onde s'étendant à partir d'environ 200 nm et pourvu d'une face de couplage destinée à un couplage optique avec un photodétecteur, photoscintillateur caractérisé en ce qu'il est poli sur toute sa surface, et en ce qu'il est recouvert, excepté sur sa face de couplage, d'une couche de poudre dont le pouvoir de réflexion optique est élevé, qui est formée de grains ayant une taille moyenne comprise entre 0,1 µm et 1 µ, et qui est maintenue exempte de liquide. De préférence ladite taille moyenne est sensiblement égale à 0,3 µm.

Ainsi, la quasi-totalité des photons lumineux produits à chaque interaction d'un photon $\gamma$ avec le photoscintillateur atteint-elle le photodétecteur et ce photodétecteur collecte donc toujours sensiblement la même quantité de photons lumineux résultant d'interactions successives, dans le photoscintillateur, de photons $\gamma$ de même énergie, quels que soient les lieux de ces interactions. On dispose ainsi d'un photoscintillateur à haute résolution en énergie.

Selon un mode de réalisation particulier du photoscintillateur objet de l'invention, celui-ci est disposé dans un boîtier étanche, ouvert à une extrémité correspondant à la face de couplage, la couche de poudre étant comprise entre les parois du boîtier et le photoscintillateur, et la surface de la couche de poudre bordant la face de couplage est recouverte d'une matière étanche.

De préférence, la poudre est une poudre d'alumine ou de magnésie.

Dans un mode de réalisation avantageux du photoscintillateur objet de l'invention, la forme de celui-ci est déterminée de façon à réduire le temps mis par la lumière susceptible d'être engendrée en un point du photoscintillateur, pour aller de ce point jusqu'à la face de couplage.

Pour ce faire, on peut réaliser le photoscintillateur de façon qu'il s'étende en se rétrécissant, à partir de sa face de couplage.

On obtient ainsi un photoscintilleteur qui présente non seulement une haute résolution en énergie mais encore une haute résolution temporelle. En effet, cette forme donnée au photoscintillateur permet d'optimiser la rapidité de collection, par le photodétecteur, des photons lumineux résultant d'interactions de photons $\gamma$ avec le photoscintillateur et notamment des photons lumineux émis dans un sens tendant à les éloigner du photodétecteur.

Enfin, la présente invention a également pour objet un détecteur à scintillation comprenant un photoscintillateur et un photodétecteur optiquement couplé à ce dernier par l'intermédiaire d'une substance de couplage, détecteur caractérisé en ce que le photoscintillateur est conforme au photoscintillateur en fluorure de baryum selon l'invention et en ce que la substance de couplage est transparente dans un domaine de longueurs d'onde s'étendant d'environ 200 nm à environ 600 nm et a un indice de réfraction de l'ordre de celui dudit fluorure de baryum. Le photodétecteur est par exemple un photomultiplicateur.

On obtient ainsi un détecteur à scintillation très rapide, qui a une haute résolution en énergie et, si la forme du photoscintillateur est adaptée comme on l'a expliqué plus haut, a également une haute résolution temporelle.

La présente invention sera mieux comprise à la lecture de la description qui suit, d'exemples de réalisation donnés à titre indicatif et nullement limitatif, en référence aux dessins annexés sur lesquels:

– la figure 1 est une vue schématique d'un mode de réalisation particulier du photoscintillateur objet de l'invention, et

– les figures 2 et 3 montrent des formes particulières que l'on peut donner à ce photoscintillateur afin que celui-ci présente une haute résolution temporelle.

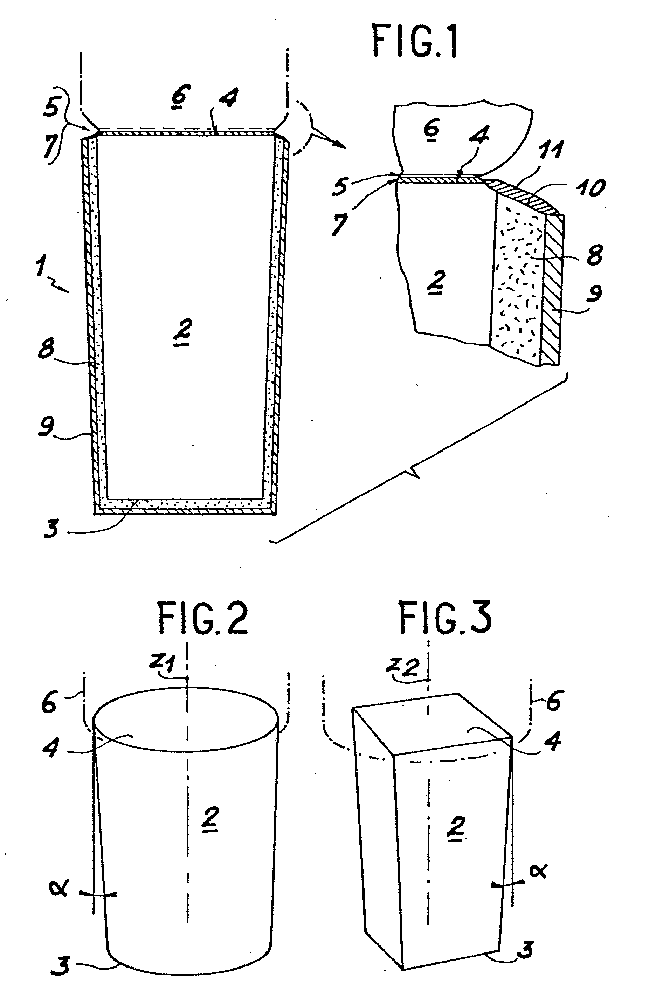

Sur la figure 1, on a représenté schématiquement un mode de réalisation particulier du photoscintillateur 1 objet de l'invention. Il comprend un bloc 2 constitué par un cristal de fluorure de baryum qui est transparent dans un domaine de longueurs d'onde commençant à environ 200 nm et pouvant aller jusqu'à 500 à 600 nm et qui, frappé par des photons $\gamma$, est capable d'émettre de la lumière dans un domaine de longueurs d'onde commençant à environ 200 nm et pouvant aller jusqu'à 600 nm, la lumière correspondant au domaine 200–250 nm étant émise avec une constante de temps très courte de l'ordre de 0,8 ns.

Le bloc 2 présente une forme allongée. Il est délimité transversalement par une première face 3 et par une seconde face 4 appelée face de couplage et prévue pour le couplage du photoscintillateur avec la fenêtre d'entrée 5 d'un photomultiplicateur 6, par l'intermédiaire d'une couche 7 réalisée en une substance de couplage appropriée dont il sera question par la suite, la fenêtre 5 ayant bien entendu un indice de réfraction proche de celui du fluorure de baryum qui vaut 1,48.

Le bloc 2 présente une forme évasée dans le sens de la collection de lumière, c'est-à-dire de sa première face 3 à sa face de couplage 4. La rapidité de la collection de lumière est ainsi optimisée, ce qui améliore les performances de temps de vol du photoscintillateur. Un léger évasement suffit. Le bloc 2 présente par exemple la forme d'un tronc de cône de révolution d'axe $Z_1$ dont la conicité $\alpha$ est faible, de l'ordre de 1 à 3 degrés par exemple (figure 2) ou la forme d'un tronc de pyramide d'axe $Z_2$ dont les faces latérales présentent une légère inclinaison $\alpha$ par rapport à l'axe $Z_2$, de l'ordre de 1 à 3 degrés par exemple (figure 3), les grandes bases du tronc de cône et du tronc de pyramide constituant bien entendu ladite face de couplage.

Par ailleurs, le bloc 2 est poli sur toute sa surface de manière à utiliser au mieux la réflexion vitreuse.

Le bloc 2 est recouvert, sauf sur sa face de couplage 4, d'une couche 8 de poudre ayant un pouvoir de réflexion élevé notamment dans l'ultraviolet, par exemple constituée de poudre de magnésie, ou mieux, d'alumine. En outre, la valeur moyenne de la taille des grains de la poudre est comprise entre 0,1 µm et 1 µm et, de préférence, sensiblement égale à 0,3 µm.

Le bloc 2 est placé dans un boîtier 9 étanche et ouvert à l'une de ses extrémités pour laisser apparaître la face de couplage 4. La taille du boîtier est légèrement supérieure à celle du bloc 2 de façon qu'il subsiste un espace entre ce dernier et le boîtier 9, pour disposer dans cet espace la couche de poudre 8, celle-ci étant ainsi maintenue contre la surface du bloc 2 par le boîtier. On choisit ledit espace suffisamment grand, par exemple de l'ordre de 1 à 1,5 mm, pour pouvoir faire pénétrer la poudre entre le bloc et le boîtier et introduire un outil dans l'espace considéré afin de compacter la poudre au maximum, ce qui permet non seulement de maintenir correctement le bloc de fluorure de baryum dans le boîtier, mais encore de réaliser une couche de poudre se comportant, vis-à-vis de la lumière, comme une couche quasi continue et ayant ainsi un pouvoir de réflexion très proche de 100%.

Afin de conserver un pouvoir de réflexion élevé au cours du temps, la couche de poudre est maintenue très sèche, en évitant qu'un liquide (ou plus généralement qu'une substance quelconque) ne pénètre dans cette couche ou ne s'interpose entre celle-ci et le bloc de fluorure de baryum 2. Ainsi, la «lame» d'air présente entre les grains de la poudre et la surface du bloc 2 est conservée, la valeur de l'indice optique relatif du fluorure de baryum par rapport à l'air l'est également et la réflexion vitreuse, qui est totale pour des angles d'incidence supérieurs à l'angle limite de réflexion (de l'ordre de 41,8°, pour le dioptre fluorure de baryum-air) est utilisée au maximum.

On peut d'ailleurs interpréter l'existence d'un optimum pour la taille moyenne des grains de la poudre par la présence de la «lame» d'air entre le bloc de fluorure de baryum et la poudre: si cette valeur moyenne est trop faible (inférieure à 0,1 µm), la «lame» d'air n'existe pratiquement pas et seul est utilisé le pouvoir réflecteur de la poudre d'alumine ou de magnésie, qui n'est pas tout à fait égal à 100%, ce qui implique une perte de lumière, et si la valeur moyenne considérée est trop forte (supérieure à 1 µm), la réflexion vitreuse est bien utilisée mais la couche de poudre n'est plus quasi continue vis-à-vis de la lumière, qui pénètre alors dans cette couche et s'y trouve absorbée, provoquant une diminution du pouvoir de réflexion de la couche.

Pour empêcher la pénétration de toute substance, en particulier de la substrance de couplage du photoscintillateur au photomultiplicateur 6, dans la couche de poudre ou entre celle-ci et le bloc 2, on recouvre la surface 10 de la poudre bordant la face de couplage 4, d'une couche de matière étanche 11 s'appuyant sur le boîtier 9 et sur le pourtour de la face de couplage 4, pourtour sur lequel on peut préalablement réaliser un chanfrein.

La matière étanche en question est par exemple un vernis très volatil de façon qu'il ne pénètre que très peu dans la couche de poudre. De préférence, la couche de vernis est obtenue à l'aide d'une solution à 50% de colle époxy et d'alcool éthylique, qui est appliquée au moyen d'un pinceau, en deux ou trois dépôts successifs espacés par des périodes de polymérisation de l'époxy après évaporation de l'alcool éthylique. Ceci a également pour effet de durcir une épaisseur de l'ordre de 0,3 à 0,5 mm de la surface de la couche de poudre et donc de rendre cette surface mécaniquement résistante.

La couche 7 de substance permettant le couplage optique entre le photoscintillateur et le photomultiplicateur doit avoir un indice de réfraction compatible avec ceux du fluorure de baryum et de la fenêtre d'entrée du photomultiplicateur (environ 1,5) et être transparente à la lumière émise par le photoscintillateur sous l'impact de photons $\gamma$, lumière dont la longueur d'onde appartient au domaine qui s'étend à partir d'environ 200 nm et peut aller jusqu'à environ 600 nm.

Or, il est très difficile de trouver des substances qui sont transparentes à des longueurs d'onde inférieures à 250 nm et qui permettent en même temps de fixer la face de couplage du photoscintillateur à la fenêtre d'entrée du photomultiplicateur.

On a seulement trouvé deux produits capables d'assurer un couplage optique convenable entre ces dernières et présentant une transmission correcte (de l'ordre de 90%) notamment pour les longueurs d'onde comprises entre 200 et 250 nm:

– une graisse silicone commercialisée par la société RHONE POULENC sous la référence 47V100000, qui permet de réaliser des couplages d'essai que l'on peut défaire facilement, mais dont la durée de vie ne dépasse pas un mois environ; en effet, la fluidité de cette graisse est telle que, environ un mois après son dépôt, la graisse quitte l'interface photoscintillateur-photomultiplicateur, en étant remplacée petit à petit par une lame d'air, ce qui détruit complètement le couplage optique, et

– une colle silicone à deux composants, polymérisable à température ambiante, également commercialisée par la société RHONE POULENC sous la référence RTV141.

Bien entendu, l'un ou l'autre des deux produits cités est disposé à l'interface des deux éléments que constituent la face de couplage du photoscintillateur et la fenêtre d'entrée du photomultiplicateur. Pour ce faire, de façon classique, on dépose une goutte du produit choisi au centre de l'un des deux éléments, l'autre élément est mis au contact du précédent de telle façon que la face de couplage et la fenêtre d'entrée soient parallèles et la goutte est étendue à l'aide de légers mouvements de rotation, en évitant ainsi toute inclusion d'air.

**Revendications**

1. Photoscintillateur très rapide réalisé en fluorure de baryum transparent dans un domaine de longueurs d'onde s'étendant à partir d'environ 200 nm et pourvu d'une face de couplage (4) destinée à un couplage optique avec un photodétecteur (6), photoscintillateur caractérisé en ce qu'il est poli sur toute sa surface, et en ce qu'il est recouvert, excepté sur sa face de couplage, d'une couche de poudre (8) dont le pouvoir de réflexion optique est élevé, qui est formée de grains ayant une taille moyenne comprise entre 0,1 μm et 1 μm, et qui est maintenue exempte de liquide.

2. Photoscintillateur selon la revendication 1, caractérisé en ce que ladite taille moyenne est sensiblement égale à 0,3 μm.

3. Photoscintillateur selon l'une quelconque des revendications 1 et 2, caractérisé en ce qu'il est disposé dans un boîtier étanche (9), ouvert à une extrémité correspondant à la face de couplage (4), la couche de poudre (8) étant comprise entre les parois du boîtier et le photoscintillateur, et en ce que la surface (10) de la couche de poudre bordant la face de couplage (4) est recouverte d'une matière étanche (11).

4. Photoscintillateur selon l'une quelconque des revendications 1 à 3, caractérisé en ce que la poudre est une poudre d'alumine ou de magnésie.

5. Photoscintillateur selon l'une quelconque des revendications 1 à 4, caractérisé en ce que sa forme est déterminée de façon à réduire le temps mis par la lumière susceptible d'être engendrée en un point du photoscintillateur, pour aller de ce point jusqu'à la face de couplage (4).

6. Photoscintillateur selon la revendication 5, caractérisé en ce qu'il s'étend en se rétrécissant, à partir de sa face de couplage (4).

7. Détecteur à scintillation comprenant un photoscintillateur (1) et un photodétecteur (6) optiquement couplé à ce dernier par l'intermédiaire d'une substance de couplage, détecteur caractérisé en ce que le photoscintillateur est conforme à l'une quelconque des revendications 1 à 6 et en ce que la substance de couplage est transparente dans un domaine de longueurs d'onde s'étendant d'environ 200 nm à environ 600 nm et a un indice de réfraction de l'ordre de celui dudit fluorure de baryum.

**Claims**

1. Very fast photoscintillator constructed of bariumfluoride which is transparent within a wavelength range extending from approximately 200 nm and provided with a coupling face (4) intended for an optical coupling with a photodetector (6), the photoscintillator being characterized in that it is polished over its entire surface, and in that it is covered, except on its coupling face, with a layer of powder (8), the optical reflecting power of which is high, which is formed of grains having an average size within the range between 0.1 μm and 1 μm, and which is kept free from liquid.

2. Photoscintillator according to Claim 1, characterized in that the said average size is substantially equal to 0.3 μm.

3. Photoscintillator according to either of Claims 1 and 2, characterized in that it is disposed within an impervious casing (9), open at one end corresponding to the coupling face (4), the layer of powder (8) being contained between the walls of the casing and the photoscintillator, and in that the surface (10) of the layer of powder bordering on the coupling face (4) is covered with an impervious material (11).

4. Photoscintillator according to any one of Claims 1 to 3, characterized in that the powder is an alumina or magnesia powder.

5. Photoscintillator according to any one of Claims 1 to 4, characterized in that its shape is determined in such a manner as to reduce the time taken by the light which is capable of being generated at a point of the photoscintillator to pass from this point to the coupling face (4).

6. Photoscintillator according to Claim 5, characterized in that it extends so as to narrow from its coupling face (4).

7. Scintillation detector comprising a photoscintillator (1) and a photodetector (6) optically coupled to the latter by means of a coupling substance, the detector being characterized in that the photoscintillator is in accordance with any one of Claims 1 to 6, and in that the coupling substance is transparent within a wavelength range extending from approximately 200 nm to approximately 600 nm and has a refractive index of the order of that of the said barium fluoride.

**Patentansprüche**

1. Sehr schneller Szintillator, der aus Bariumfluorid besteht, das in einem Wellenlängenbereich transparent ist, der sich von etwa 200 nm ausgehend erstreckt, und das mit einer Kopplungsfläche (4) versehen ist, die für eine optische Kopplung mit einem Photodetektor (6) bestimmt ist, dadurch gekennzeichnet, dass er auf seiner gesamten Oberfläche poliert ist und dass er mit Ausnahme der Kopplungsfläche von einer Pulverschicht (8) von erhöhtem optischen Reflexionsvermögen bedeckt ist, die eine mittlere Korngrösse zwischen 0,1 µm und 1 µm aufweist und die frei von Flüssigkeit gehalten ist.

2. Szintillator nach Anspruch 1, dadurch gekennzeichnet, dass die mittlere Korngrösse etwa 0,3 µm beträgt.

3. Szintillator nach einem der Ansprüche 1 und 2, dadurch gekennzeichnet, dass er in einem dichten Behälter (9) angeordnet ist, der an einem der Kopplungsfläche (4) entsprechenden Ende offen ist, wobei die Pulverschicht (8) zwischen den Wänden des Behälters und dem Szintillator liegt, und dass die Fläche (10) der Pulverschicht, die an die Kopplungsfläche (4) angrenzt, von einer Dichtungsmasse (11) bedeckt ist.

4. Szintillator nach einem der Ansprüche 1 bis 3, dadurch gekennzeichnet, dass das Pulver ein Aluminiumoxid- oder Magnesiumoxidpulver ist.

5. Szintillator nach einem der Ansprüche 1 bis 4, dadurch gekennzeichnet, dass seine Form so bestimmt ist, dass die Zeit vermindert wird, die das an einem Szintillatorpunkt erzeugte Licht benötigt, um von diesem Punkt bis zur Kopplungsfläche (4) zu laufen.

6. Szintillator nach Anspruch 5, dadurch gekennzeichnet, dass er sich von der Kopplungsfläche (4) ausgehend enger werdend erstreckt.

7. Szintillatordetektor, enthaltend einen Szintillator (1) und einen Photodetektor (6), der optisch an letzteren mittels einer Kopplungssubstanz gekoppelt ist, dadurch gekennzeichnet, dass der Szintillator nach einem der Ansprüche 1 bis 6 aufgebaut ist und dass die Kopplungssubstanz in dem sich zwischen etwa 200 nm bis etwa 600 nm erstreckenden Wellenlängenbereich transparent ist und einen Brechungsindex aufweist, der in der Grössenordnung von demjenigen von Bariumfluorid liegt.

# FIG.1

# FIG.2

# FIG.3